# FASCICULE DE BREVET EUROPEEN

(11) **EP 4 344 132 B1**
(45) Date de publication et mention de la délivrance du brevet: **15.04.2026**
(21) Numéro de dépôt: 23198337.0
(22) Date de dépôt: 19.09.2023
(51) Int. Cl.: H04L 9/40

(54) **SYSTEME ET PROCEDE D'EXPOSITION DE DONNEES D'UN DOMAINE NOIR VERS UN DOMAINE ROUGE**
SYSTEM UND VERFAHREN ZUR BLOSSSTELLUNG VON DATEN EINER SCHWARZEN DOMÄNE ZU EINER ROTEN DOMÄNE
SYSTEM AND METHOD FOR EXPOSING DATA FROM A BLACK TO A RED DOMAIN

(30) Priorité: 21.09.2022 FR 2209555
(43) Date de publication de la demande: 27.03.2024
(73) Titulaire: Airbus Defence and Space SAS, 31402 Toulouse Cedex 4 (FR)
(72) Inventeur: LE CAM, Julien, 78997 ELANCOURT (FR)
(74) Mandataire: Cabinet Le Guen Maillet

(56) Documents cités:
- EP-A1- 2 204 034
- EP-A1- 3 447 987
- US-B1- 10 915 081

## Description

### DOMAINE TECHNIQUE

La présente invention concerne une exposition de données d'un domaine noir vers un domaine rouge, les données étant plus particulièrement relatives à des conditions de transmission réseau (métrologie et/ou topologie) dans le domaine noir, le domaine rouge étant par définition un domaine réseau de plus haut niveau de sécurité que le domaine noir.

### ETAT DE LA TECHNIQUE ANTERIEURE

Le fonctionnement des réseaux étendus WAN (« Wide Area Network » en anglais) est aujourd'hui de plus en plus contrôlé de manière centralisée, typiquement par un contrôleur SDN (« Software Defined Network » en anglais). Cette approche centralisée qui s'appuie sur une séparation des plans de données et de contrôle prend des décisions de routage basées visant à déterminer un itinéraire optimal vers une destination en fonction de la topologie, de la qualité des liens du réseau et de contraintes. Un algorithme de type CSPF (« Constrained Shortest Path First » en anglais) est classiquement utilisé pour ce faire. Cela est notamment, mais non exclusivement, le cas dans des infrastructures réseau reposant sur un protocole de transport de type MPLS (« Multi-Protocol Label Switching » en anglais), tel que défini dans le document normatif RFC 3031. Grâce à un tel protocole, un routeur de départ utilise des labels de transport permettant, pour chaque paquet, de déterminer un routeur de sortie, sans que chaque routeur intermédiaire ait besoin de scruter une table de routage volumineuse lors de la propagation du paquet.

Or, les architectures réseau peuvent reposer sur des réseaux de communication ayant des exigences différentes en termes de sécurité des données qui y transitent. Certains réseaux de communication ayant des exigences fortes en termes de sécurité peuvent avoir recours à d'autres réseaux de communication dans lesquels le niveau d'exigences en termes de sécurité est inférieur, pour faire transiter les données d'un sous-réseau de communication à fortes exigences de sécurité à un autre. On parle de réseau de communication de type rouge pour le réseau de communication de plus haut niveau de sécurité et de réseau de communication de type noir pour le réseau de communication de plus bas niveau de sécurité. Par exemple, un premier groupe de dispositifs d'un premier sous-réseau de communication de type rouge communique avec un second groupe de dispositifs d'un second sous-réseau de communication de type rouge via un réseau de communication de transit non sécurisé ou de niveau de sécurité inférieur à celui de type rouge, dit de type noir. On parle aussi de domaine noir pour désigner le réseau de communication de type noir, et de domaine rouge pour désigner l'ensemble formé par les premier et second sous-réseaux de communication de type rouge. Le concept de réseau noir / rouge est brièvement expliqué au lien suivant : https://en.wikipedia.org/wiki/Red/black concept .

Un inconvénient de ce genre d'infrastructure de communication est qu'il n'existe aujourd'hui pas de solution adéquate pour permettre à un dispositif du domaine rouge d'obtenir des informations auprès d'un ou plusieurs dispositifs du réseau de communication de transit de type noir, sans avoir à remettre en cause des exigences de sécurité des sous-réseaux de communication de type rouge, ce qui nuit à l'approche centralisée susmentionnée de contrôle du fonctionnement des réseaux étendus WAN. Ainsi, il est souhaitable de fournir une solution qui permette à un dispositif du domaine rouge de recueillir des informations relatives aux conditions de transmission dans le domaine noir, telles que des informations de topologie du domaine noir et des informations de qualité de liens dans le domaine noir.

Il est connu le document de brevet EP 2 204 034 A1, qui divulgue une passerelle bidirectionnelle entre un réseau de sécurité haute et un réseau de sécurité basse. Il est aussi connu le document de brevet EP 3 447 987 A1, qui divulgue un réseau de communication comportant plusieurs zones avec des niveaux de sécurité propres et un ou plusieurs pares-feux permettant de définir des communications autorisées dans le réseau de communication. Il est aussi connu le document de brevet US 10,915,081 B1, qui divulgue une passerelle comportant un composant, appelé *« field-facing component »,* interfaçant avec un réseau de dispositifs sources de données et un autre composant, appelé « *edge facing component »,* interfaçant avec un réseau de dispositifs consommateurs de données, ces composants étant interconnectés par l'intermédiaire d'une diode.

### EXPOSE DE L'INVENTION

A cet effet, il est proposé un système d'exposition de données configuré pour exposer à un équipement des données de métrologie et de topologie d'un réseau de communication d'un domaine d'un premier niveau de sécurité, l'équipement appartenant à un domaine d'un deuxième niveau de sécurité plus élevé que le premier niveau de sécurité, le système d'exposition de données comportant : un dispositif mandataire, configuré pour effectuer une collecte de données de métrologie dudit réseau de communication et de données de topologie dudit réseau de communication à partir de messages transmis dans ledit réseau de communication et captés par ledit dispositif mandataire, et pour exposer les données de métrologie et de topologie dudit réseau de communication ; une diode placée entre le dispositif mandataire et ledit équipement, la diode autorisant physiquement des transmissions unidirectionnelles uniquement depuis le dispositif mandataire vers le domaine de deuxième niveau de sécurité.

Ainsi, grâce au dispositif mandataire et à la diode ainsi agencés, des informations relatives aux conditions de transmission dans le premier domaine de sécurité (domaine noir) peuvent être transmises à un équipement du deuxième domaine de sécurité (domaine rouge), sans brèche de sécurité.

Dans un mode de réalisation particulier, le système d'exposition de données comporte en outre : un premier pare-feu, placé entre ledit réseau de communication et le dispositif mandataire, et configuré pour limiter des échanges entre le dispositif mandataire et ledit réseau de communication à la collecte desdites données de métrologie et de topologie ; un deuxième pare-feu, placé entre le dispositif mandataire et la diode, et configuré pour limiter des échanges avec le dispositif mandataire à une exposition desdites données de métrologie et de topologie dudit réseau de communication.

Dans un mode de réalisation particulier, le premier pare-feu et le deuxième pare-feu incluent un système de prévention des intrusions.

Dans un mode de réalisation particulier, le dispositif mandataire comporte : un premier tampon mémoire dédié à collecter les données de métrologie transmises via ledit réseau de communication et relatives à des qualités de liens dudit réseau de communication ; une première base de données utilisée pour exposer les données de métrologie audit équipement ; un processeur de données de métrologie configuré pour traiter les données de métrologie dans le premier tampon mémoire, en charge de transférer des données stockées dans le premier tampon mémoire vers la première base de données, configuré pour ajouter un identifiant par ensemble de données de métrologie transféré dans la première base de données, l'identifiant en question permettant de déterminer quelles données dans la première base de données sont les plus récentes ; un deuxième tampon mémoire dédié à collecter les données de topologie transmises via ledit réseau de communication et relatives audit réseau de communication ; une deuxième base de données utilisée pour exposer les données de topologie audit équipement ; un processeur de données de topologie configuré pour traiter les données de topologie dans le deuxième tampon mémoire, en charge de transférer des données stockées dans le deuxième tampon mémoire vers la deuxième base de données, configuré pour ajouter un identifiant par ensemble de données de topologie transféré dans la deuxième base de données, l'identifiant en question permettant de déterminer quelles données dans la deuxième base de données sont les plus récentes.

Dans un mode de réalisation particulier, le processeur de données de métrologie est configuré pour effectuer du filtrage dans le premier tampon mémoire pour éviter d'insérer des données de métrologie déjà obsolètes dans la première base de données, et le processeur de données de topologie est configuré pour effectuer du filtrage dans le deuxième tampon mémoire pour éviter d'insérer des données de topologie déjà obsolètes dans la deuxième base de données.

Dans un mode de réalisation particulier, le processeur de données de topologie est configuré pour effectuer du filtrage dans le deuxième tampon mémoire pour retenir un état stable de lien le plus récent lorsqu'au moins un lien montre dans le deuxième tampon mémoire des changements intempestifs d'état de lien.

Dans un mode de réalisation particulier, le dispositif mandataire comporte : une troisième base de données utilisée pour exposer des données agrégées de métrologie et de topologie audit équipement ; et un processeur d'agrégation d'informations, en charge d'agréger et de transférer, dans la troisième base de données, des données stockées dans la première base de données et des données stockées dans la deuxième base de données, le processeur d'agrégation d'informations étant configuré pour rassembler, par lien de communication, les informations de topologie stockées dans la deuxième base de données les plus récentes et les informations de métrologie stockées dans la première base de données les plus récentes.

Dans un mode de réalisation particulier, le dispositif mandataire est un dispositif mandataire maître dans un groupement de dispositifs mandataires du système d'exposition de données incluant en outre un dispositif mandataire de repli qui partage des mêmes adresses virtuelles que le dispositif mandataire maître et qui est destiné à remplacer le dispositif mandataire maître en cas de défaillance dudit dispositif mandataire maître, le dispositif mandataire maître étant configuré pour mettre à jour, au fur et à mesure des stockages dans ses bases de données, le dispositif mandataire de repli.

Dans un mode de réalisation particulier, la diode autorise uniquement des transmissions réalisées selon des protocoles prédéfinis de couche de transport.

Dans un mode de réalisation particulier, le système d'exposition de données comporte en outre un dispositif mandataire inverse, placé entre la diode et ledit équipement, et configuré pour recevoir les données de métrologie et de topologie dudit réseau de communication telles qu'exposées par le dispositif mandataire, et pour effectuer des échanges bidirectionnels avec ledit équipement.

Dans un mode de réalisation particulier, le système d'exposition de données comporte un troisième pare-feu, placé entre la diode et le dispositif mandataire inverse, et configuré pour limiter des échanges avec la diode à une obtention desdites données de métrologie et de topologie dudit réseau de communication telles qu'exposées par le dispositif mandataire.

Il est aussi proposé un procédé pour exposer à un équipement des données de métrologie et de topologie d'un réseau de communication d'un domaine d'un premier niveau de sécurité, l'équipement appartenant à un domaine d'un deuxième niveau de sécurité plus élevé que le premier niveau de sécurité, le procédé étant implémenté par un système d'exposition de données comportant un dispositif mandataire et une diode, placée entre le dispositif mandataire et ledit équipement. Le procédé comporte les étapes suivantes le dispositif mandataire effectue une collecte de données de métrologie dudit réseau de communication et de données de topologie dudit réseau de communication à partir de messages transmis dans ledit réseau de communication et captés par ledit dispositif mandataire, et expose les données de métrologie et de topologie dudit réseau de communication ; et la diode autorise physiquement des transmissions unidirectionnelles uniquement depuis le dispositif mandataire vers le domaine de deuxième niveau de sécurité.

Dans un mode de réalisation particulier, le système d'exposition de données comporte en outre un dispositif mandataire inverse, placé entre la diode et ledit équipement. Et le procédé comporte les étapes suivantes : le dispositif mandataire inverse reçoit les données de métrologie et de topologie dudit réseau de communication telles qu'exposées par le dispositif mandataire, et effectue des échanges bidirectionnels avec ledit équipement pour exposer les données de métrologie et de topologie dudit réseau de communication à l'équipement.

### BREVE DESCRIPTION DES DESSINS

La description suivante d'au moins un mode de réalisation est établie en relation avec les dessins joints, parmi lesquels :
[Fig. 1] illustre schématiquement une architecture réseau incluant un système d'exposition de données exposant des données d'un domaine noir à un équipement d'un domaine rouge ;
[Fig. 2] illustre schématiquement un agencement de dispositif mandataire du système d'exposition de données ;
[Fig. 3] illustre schématiquement un agencement de plateforme matérielle utilisable pour implémenter le dispositif mandataire ;
[Fig. 4] illustre schématiquement un agencement de groupement de dispositifs mandataires, dans un mode de réalisation particulier du système d'exposition de données ;
[Fig. 5] illustre schématiquement un autre agencement du système d'exposition de données ; et
[Fig. 6] illustre schématiquement un organigramme d'un algorithme implémenté par le système d'exposition de données.

### EXPOSE DETAILLE DE MODES DE REALISATION

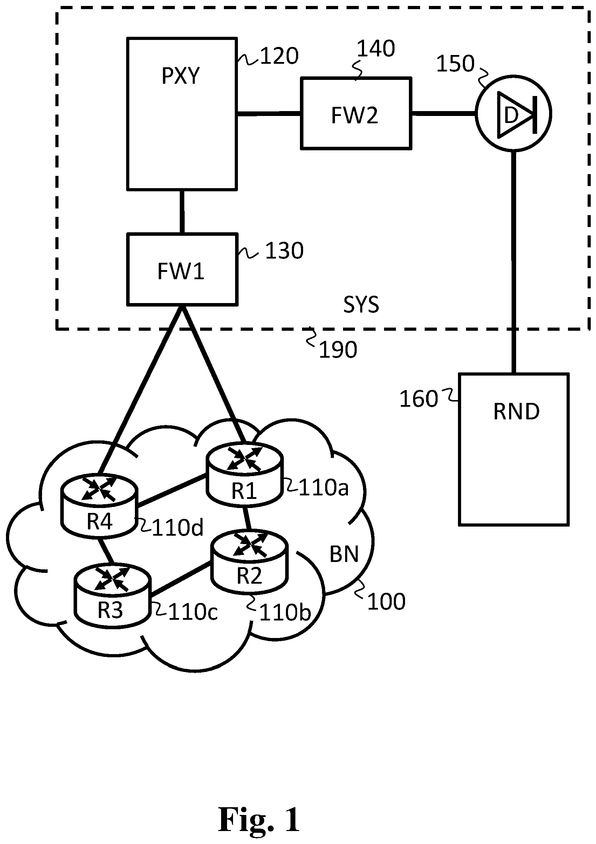

La **Fig. 1** illustre schématiquement une architecture réseau, incluant un système d'exposition de données SYS 190 configuré pour exposer des données d'un domaine ayant un premier niveau de sécurité (typiquement un domaine non sécurisé), appelé domaine noir, à un équipement RNE 160 d'un domaine ayant un deuxième niveau de sécurité (typiquement un domaine non sécurisé), appelé domaine rouge. Le deuxième niveau de sécurité est plus sécurisé que le premier niveau de sécurité (ainsi, le domaine rouge est plus sécurisé que le domaine noir). Le système d'exposition de données SYS 190 peut être configuré pour exposer des données du domaine noir à plusieurs équipements RNE 160 du domaine rouge. Par exemple, lorsque le système d'exposition de données SYS 190 est configuré pour exposer des données du domaine noir à un unique équipement du domaine rouge, le système d'exposition de données SYS 190 peut exposer ces données de manière agrégée entre données de métrologie et données de topologie. Et lorsque le système d'exposition de données SYS 190 est configuré pour exposer des données du domaine noir à plusieurs équipements du domaine rouge, le système d'exposition de données SYS 190 peut :
- exposer des données de métrologie à un équipement du domaine rouge et des données de topologie à un autre équipement du domaine rouge, ou
- exposer des données de métrologie à un équipement du domaine rouge et des données de manière agrégée entre données de métrologie et données de topologie à un autre équipement du domaine rouge, ou
- exposer des données de topologie à un équipement du domaine rouge et des données de manière agrégée entre données de métrologie et données de topologie à un autre équipement du domaine rouge, ou
- exposer des données de manière agrégée entre données de métrologie et données de topologie à chaque équipement concerné du domaine rouge.

L'architecture réseau comporte un réseau de communication BN 100 de transit dans le domaine noir. Typiquement le réseau de communication BN 100 permet d'interconnecter, par exemple grâce à des tunnels sécurisés, plusieurs sous-réseaux du domaine rouge. De manière purement illustrative, la Fig. 1 présente quatre routeurs R1 110a, R2 110b, R3 110c et R4 110d dans le réseau de communication BN 100.

Pour permettre à l'équipement RNE 160 dans le domaine rouge d'obtenir des informations relatives aux conditions de transmission dans le réseau de communication BN 100, l'architecture réseau comporte le système d'exposition de données SYS 190.

Le système d'exposition de données SYS 190 comporte un dispositif mandataire (« proxy device » en anglais) PXY 120, qui est configuré pour recevoir des informations sur les conditions de transmission dans le réseau de communication BN 100 grâce à un protocole dédié implémenté dans le réseau de communication BN 100, typiquement grâce à un ou plusieurs protocoles standards, par exemple de type BGP-LS (« Border Gateway Protocol - Link-State » en anglais ou OSPF (« Open Shortest Path First » en anglais) ou IS-IS (« Intermediate System to Intermediate System » en anglais). Par exemple, en recevant des messages de type BGP UPDATE transitant dans le réseau de communication 100, le dispositif mandataire PXY 120 est apte à collecter et stocker des données permettant de construire une représentation de la topologie du réseau de communication 100.

Il convient de noter que le dispositif mandataire PXY 120 est passif, en ce que le dispositif mandataire PXY 120 est configuré pour collecter les informations sur les conditions de transmission dans le réseau de communication BN 100, mais pas pour participer à une prise de décision de routage dans le réseau de communication BN 100 ou à un calcul de route dans le réseau de communication BN 100. Le dispositif mandataire PXY 120 joue ainsi un rôle de capteur de messages transmis dans le réseau de communication BN 100 pour ce qui concerne les conditions de transmission dans le réseau de communication BN 100 (métrologie et topologie). Il convient donc plus particulièrement de noter que le dispositif mandataire PXY 120 ne joue pas de rôle de contrôleur SDN.

Pour assurer la sécurisation du domaine rouge, le système d'exposition de données SYS 190 comporte une diode D 150 entre le dispositif mandataire PXY 120 et le domaine rouge. La diode D 150 est un dispositif qui autorise physiquement des transmissions unidirectionnelles, à savoir uniquement depuis le dispositif mandataire PXY 120 vers le domaine rouge (et donc vers l'équipement RNE 160). La diode D 150 permet par conception une ségrégation physique, et non par configuration (contrairement donc à un pare-feu), ce qui en fait un dispositif qui empêche de recevoir des données du domaine rouge sur son chemin, ce qui évite que des données ou messages en clair du domaine rouge ne soient potentiellement visibles du domaine noir. Préférentiellement, la diode D 150 autorise uniquement des transmissions réalisées selon des protocoles prédéfinis de couche de transport (4^{e} couche du modèle OSI (« Open Systems Interconnection » en anglais). Par exemple, la diode D 150 interdit que des paquets conformes aux protocoles ICMP (« Internet Control Message Protocol » en anglais), BGP-LS, OSPF ou tout autre protocole de type IGP (« Interior Gateway Protocol » en anglais), ne puissent transiter depuis le dispositif mandataire PXY 120 vers le domaine rouge (et donc vers l'équipement RNE 160). Les transmissions depuis le dispositif mandataire PXY 120 vers l'équipement RNE 160 sont donc réalisées conformément à un protocole de couche de transport autorisé par la diode D 150, préférentiellement UDP (« User Datagram Protocol » en anglais).

Pour assurer la protection du dispositif mandataire PXY 120 du réseau de communication 100, le système d'exposition de données SYS 190 comporte préférentiellement un premier pare-feu FW1 130 entre le dispositif mandataire PXY 120 et le réseau de communication 100, le premier pare-feu FW1 130 étant configuré pour limiter les échanges entre le dispositif mandataire PXY 120 et le réseau de communication 100 aux besoins de l'obtention par le dispositif mandataire PXY 120 des informations sur les conditions de transmission dans le réseau de communication 100. Le premier pare-feu FW1 130 supprime la capacité du réseau de communication 100 d'inonder (« flooding » en anglais) de messages le dispositif mandataire PXY 120, typiquement par déni de service distribué DDoS (« Distributed Deny of Service » en anglais).

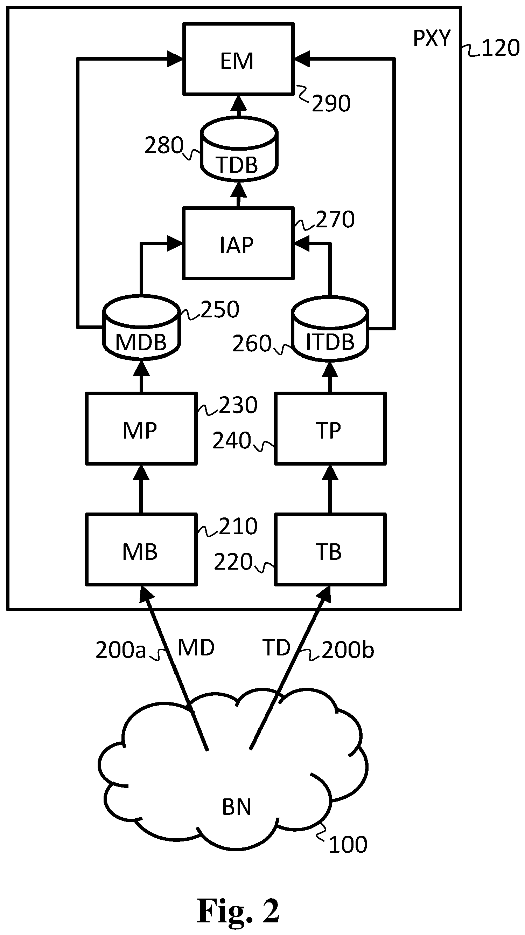

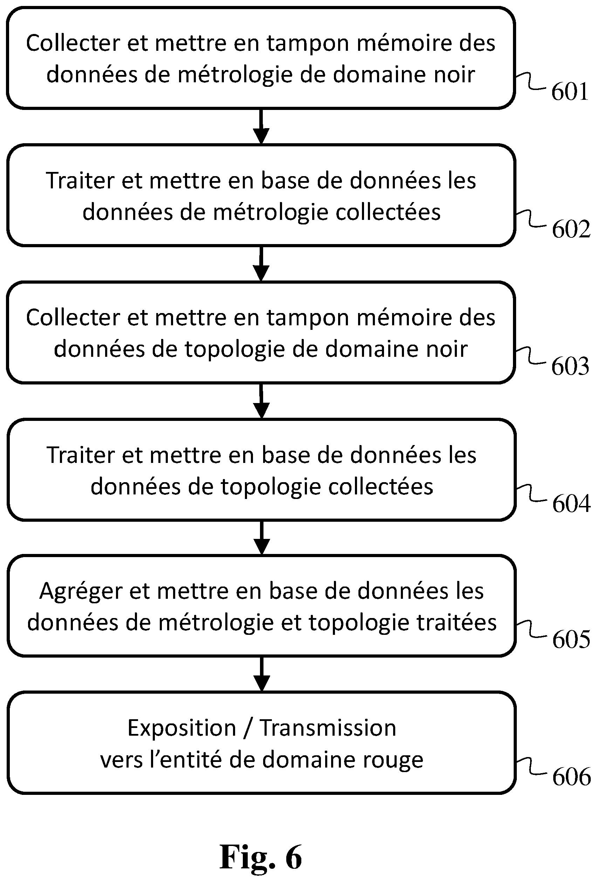

Le dispositif mandataire PXY 120 est destiné à traiter les informations de conditions de transmission dans le réseau de communication 100 et à transmettre ces informations après traitement à l'équipement RNE 160 dans le domaine rouge. Un agencement particulier du dispositif mandataire PXY 120 est détaillé ci-après en relation avec la Fig. 2, et un procédé décrivant le fonctionnement du dispositif mandataire PXY 120 est détaillé ci-après en relation avec la Fig. 6 dans un mode de réalisation particulier.

Pour renforcer la sécurisation du domaine rouge, le système d'exposition de données SYS 190 comporte un deuxième pare-feu FW2 140 entre le dispositif mandataire PXY 120 et le domaine rouge, afin de limiter les échanges entre le dispositif mandataire PXY 120 et le domaine rouge aux besoins de l'exposition par le dispositif mandataire PXY 120 des informations sur les conditions de transmission dans le réseau de communication 100. Le deuxième pare-feu FW2 140 supprime la capacité du dispositif mandataire PXY 120 d'inonder (« flooding » en anglais) de messages la diode D 150 et par conséquent le domaine rouge.

Ainsi, grâce au premier pare-feu FW1 130 et au deuxième pare-feu FW2 140, le dispositif mandataire PXY 120 est contenu dans une zone démilitarisée DMZ (« DeMilitarized Zone » en anglais).

Préférentiellement, le premier pare-feu FW1 130 et le deuxième pare-feu FW2 140 incluent un système de prévention des intrusions IPS (« Intrusion Prevention system » en anglais) afin de détecter, prévenir et contrer d'éventuelles tentatives d'intrusions malveillantes.

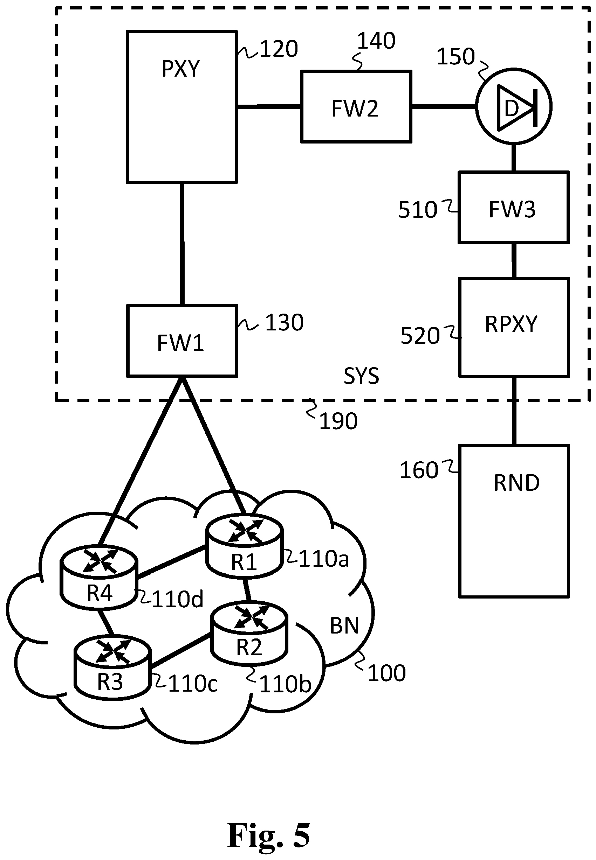

Ainsi, préférentiellement, les transmissions depuis le dispositif mandataire PXY 120 vers l'équipement RNE 160 sont réalisées conformément au protocole UDP tel que défini dans le document normatif RFC 768. Un arrangement particulier permettant des échanges sécurisés avec l'équipement RNE 160 en utilisant toutefois un protocole bidirectionnel, tel que le protocole TCP (« Transmission Control Protocol » en anglais) défini dans le document normatif RFC 791, est présenté ci-après en relation avec la Fig. 5.

Il convient de noter que les messages transmis, de manière sécurisée (tunnels...), par le domaine rouge à travers le domaine noir utilisent un autre chemin de données que via le dispositif mandataire PXY 120.

Il convient aussi de noter qu'un ou plusieurs autres pares-feux peuvent être présents dans le domaine rouge entre le système d'exposition de données SYS 190 et l'équipement RNE 160 afin de renforcer la sécurité de l'équipement RNE160 et plus généralement du domaine rouge.

La Fig. 2 illustre schématiquement un agencement particulier de dispositif mandataire PXY 120.

Le dispositif mandataire PXY 120 comporte une première base de données MDB 250 dédiée au stockage d'informations de métrologie relatives au réseau de communication BN 100. Lorsque l'équipement RNE 160 a besoin, par configuration, uniquement des informations de métrologie relatives au réseau de communication BN 100, le dispositif mandataire PXY 120 peut être configuré pour exporter uniquement le contenu de la première base de données MDB 250 audit équipement RNE 160.

Le dispositif mandataire PXY 120 comporte une deuxième base de données, appelée ici (« herein » en anglais) base de données intermédiaire de topologie ITDB 260, dédiée au stockage d'informations de topologie relatives au réseau de communication BN 100. Lorsque l'équipement RNE 160 a besoin, par configuration, uniquement des informations de topologie relatives au réseau de communication BN 100, le dispositif mandataire PXY 120 peut être configuré pour exporter uniquement le contenu de la deuxième base de données ITDB 260 audit équipement RNE 160.

Le dispositif mandataire PXY 120 comporte une troisième base de données, appelée ici (« herein » en anglais) base de données de topologie TDB 280, dédiée au stockage d'informations agrégées de métrologie et topologie relatives au réseau de communication BN 100. Lorsque l'équipement RNE 160 a besoin, par configuration, d'informations agrégées de métrologie et de topologie relatives au réseau de communication BN 100, le dispositif mandataire PXY 120 peut être configuré pour exporter uniquement le contenu de la troisième base de données ITDB 260 audit équipement RNE 160.

Le dispositif mandataire PXY 120 comporte un premier tampon mémoire (« buffer » en anglais) MB 210 dédié à collecter des données de métrologie MD 200a transmises via le réseau de communication BN 100 et relatives à des qualités de liens du réseau de communication BN 100. Le dispositif mandataire PXY 120 est configuré pour stocker dans le premier tampon mémoire MB 210 chaque message qui inclut des données de métrologie et qui est reçu du réseau de communication BN 100 pendant une fenêtre temporelle de durée prédéfinie. Le premier tampon mémoire MB 210 permet d'absorber des pics de volume de données de métrologie qui pourraient survenir du réseau de communication BN 100.

Le dispositif mandataire PXY 120 comporte un processeur, ou module de traitement, de données de métrologie MP 230, en charge de transférer des données stockées dans le premier tampon mémoire MB 210 vers la première base de données MDB 250. Le processeur de données de métrologie MP 230 est configuré pour ajouter un identifiant par ensemble de données de métrologie stocké dans la première base de données MDB 250, l'identifiant en question permettant de déterminer quelles données dans la première base de données MDB 250 sont les plus récentes. Le processeur de données de métrologie MP 230 peut être configuré pour effectuer du filtrage dans les messages stockés dans le premier tampon mémoire MB 210, notamment pour éviter d'insérer des données de métrologie déjà obsolètes dans la première base de données MDB 250 et ainsi éviter que ces données obsolètes ne soient ensuite exposées à l'équipement RNE 160.

Le dispositif mandataire PXY 120 comporte un deuxième tampon mémoire TB 220 dédié à collecter des données de topologie TD 200a transmises via le réseau de communication BN 100 et relatives audit réseau de communication BN 100. Le dispositif mandataire PXY 120 est configuré pour stocker dans le deuxième tampon mémoire TB 220 chaque message qui inclut des données de topologie et qui est reçu du réseau de communication BN 100 pendant la fenêtre temporelle de durée prédéfinie. Le deuxième tampon mémoire TB 220 permet d'absorber des pics de volume de données de topologie qui pourraient survenir du réseau de communication BN 100.

Le dispositif mandataire PXY 120 comporte un processeur, ou module de traitement, de données de topologie TP 240, en charge de transférer des données stockées dans le deuxième tampon mémoire TB 220 vers la deuxième base de données ITDB 260. Le processeur de données de topologie TP 240 est configuré pour ajouter un identifiant à chaque ensemble de données de topologie stocké dans la deuxième base de données ITDB 260, l'identifiant en question permettant de déterminer quelles données dans la deuxième base de données ITDB 260 sont les plus récentes. Le processeur de données de topologie TP 230 peut être configuré pour effectuer du filtrage dans les messages stockés dans le deuxième tampon mémoire MB 210, notamment pour éviter d'insérer des données de topologie déjà obsolètes dans la deuxième base de données ITDB 260 et ainsi éviter que ces données obsolètes ne soient ensuite exposées à l'équipement RNE 160. Dans un mode de réalisation particulier, le processeur de données de topologie TP 230 est configuré pour retenir un état stable de lien le plus récent lorsque le contenu du deuxième tampon mémoire montre des changements intempestifs d'état de lien (« link state flapping » en anglais) pour un ou plusieurs liens dans le réseau de communication BN 100.

Le dispositif mandataire PXY 120 comporte un processeur, ou module de traitement, d'agrégation d'informations IAP 270, en charge d'agréger et de transférer, dans la troisième base de données TDB 280, des données stockées dans la première base de données MDB 250 et des données stockées dans la deuxième base de données ITDB 260. Le processeur d'agrégation d'informations IAP 270 est configuré pour rassembler, par lien de communication, les informations de topologie de la deuxième base de données ITDB 260 et les informations de métrologie stockées dans la première base de données MDB 250 les plus récentes. Le processeur d'agrégation d'informations IAP 270 peut s'appuyer, pour ce faire, sur des indications d'identifiants de liens de communications, de noms d'hôtes, d'adressage (e.g., adresses IP (« Internet Protocol » en anglais) ...) contenues dans les informations de métrologie et de topologie contenues dans les messages reçus du réseau de communication 100.

Le dispositif mandataire PXY 120 comporte un gestionnaire d'exposition EM 290, en charge d'exposer les informations de métrologie et/ou de topologie à un ou plusieurs équipements du domaine rouge. Le dispositif mandataire PXY 120 est configuré pour récupérer, par configuration selon le besoin du domaine rouge, les informations contenues dans la troisième base de données TDB 280 (données agrégées) ou dans la deuxième base de données ITDB 260 (données de topologie seules) ou dans la première base de données MDB 250 (données de métrologie seules), et pour les transmettre à l'équipement RNE 160.

Les transmissions depuis le gestionnaire d'exposition EM 290 vers le domaine rouge peuvent être effectuées selon un cadencement prédéfini, ou en variante, lorsqu'un changement de topologie ou de capacité de lien dans le réseau de communication 100 au-delà d'un seuil prédéterminé est noté par le gestionnaire d'exposition EM 290. L'équipement RNE 160 est donc en attente des transmissions, en provenance du dispositif mandataire PXY 120, des données de métrologie et/ou de topologie du réseau de communication 100.

En variante, un mode de réalisation particulier reposant sur un dispositif mandataire inverse (« reverse proxy » en anglais) RPXY 520, détaillé ci-après en relation avec la Fig. 5, permet à l'équipement RNE 160 de requérir les données de métrologie et/ou de topologie du réseau de communication 100 à son rythme, sans nuire à la sécurité du domaine rouge par rapport au domaine noir.

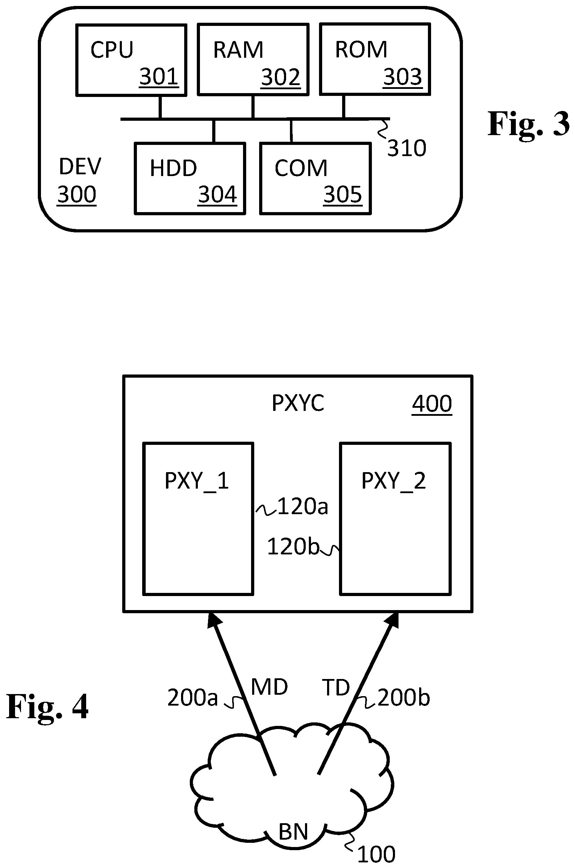

La **Fig. 3** illustre schématiquement un exemple de dispositif DEV 300 adapté pour implémenter le dispositif mandataire PXY 120. L'exemple de dispositif DEV 300 est aussi adapté pour implémenter le dispositif mandataire inverse RPXY 520. L'exemple de dispositif DEV 300 est aussi adapté pour implémenter un pare-feu, tel que le premier pare-feu FW1 130 et le deuxième pare-feu FW2 140.

Le dispositif DEV 130 comprend, reliés par un bus de communication 310 : un processeur ou CPU (pour « Central Processing Unit » en anglais) 301 ; une mémoire vive RAM (pour « Random Access Memory » en anglais) 302 ; une mémoire morte ROM (pour « Read Only Memory » en anglais) 303, ou une mémoire réinscriptible de type EEPROM (« Electrically Erasable Programmable ROM » en anglais), par exemple de type Flash ; un dispositif de stockage de données, tel qu'un disque dur HDD (pour « Hard Disk Drive » en anglais) 304, ou un lecteur de support de stockage, tel qu'un lecteur de cartes SD (pour « Secure Digital » en anglais) ; un ensemble d'interfaces de communication COM 305, permettant notamment au dispositif DEV 300 d'interagir avec d'autres équipements.

Notamment, dans le cas du dispositif mandataire PXY 120, l'ensemble d'interfaces de communication COM 305 comporte une première interface de communication uNET (pour « untrusted network » en anglais) destinée à servir d'interface avec le domaine noir, et une deuxième interface de communication tNET (pour « trusted network » en anglais) destinée à servir d'interface avec le domaine rouge. Dans un mode de réalisation particulier, tel que décrit ci-après en relation avec la Fig. 4, l'ensemble d'interfaces de communication COM 305 peut comporter une troisième interface de communication rNET (pour « resiliency network » en anglais) destinée à servir d'interface de communication dans le cadre d'un groupement (« cluster » en anglais) de dispositifs mandataires.

Le processeur 301 est capable d'exécuter des instructions chargées dans la RAM 302 à partir de la ROM 303, d'une mémoire externe (non représentée), d'un support de stockage, tel qu'une carte SD ou le disque dur HDD 304, ou d'un réseau de communication. Lorsque le dispositif DEV 300 est mis sous tension, le processeur 301 est capable de lire de la RAM 302 des instructions et de les exécuter. Ces instructions forment un programme d'ordinateur causant l'implémentation, par le processeur 301, de tout ou partie des étapes, comportements et algorithmes décrits ici (« herein » en anglais).

Tout ou partie des étapes, comportements et algorithmes décrits ici (« herein » en anglais) peut ainsi être implémenté sous forme logicielle par exécution d'un ensemble d'instructions par une machine programmable, telle qu'un DSP (« Digital Signal Processor » en anglais) ou un processeur, ou être implémenté sous forme matérielle par une machine ou un composant (« chip » en anglais) dédié ou un ensemble de composants dédié (« chipset » en anglais), tel qu'un FPGA (pour « Field-Programmable Gate Array » en anglais) ou un ASIC (pour « Application-Specific Integrated Circuit » en anglais).

D'une manière générale, le dispositif DEV 300 (et plus généralement le système d'exposition de données SYS 190) comprend donc de la circuiterie électronique agencée et configurée pour implémenter les étapes, comportements et algorithmes décrits ici (« herein » en anglais).

Comme déjà évoqué, la **Fig. 4** illustre schématiquement un agencement de groupement de dispositifs mandataires, dans un mode de réalisation particulier du système d'exposition de données SYS 190. L'agencement repose sur une redondance matérielle de dispositifs mandataires, afin d'apporter de la résilience au système d'exposition de données SYS 190. Deux dispositifs mandataires PXY_1 120a et PXY_2 120b sont schématiquement illustrés sur la Fig. 4 dans un groupement PXYC 400 en lieu et place du seul dispositif mandataire PXY 120 de la Fig. 1.

Les dispositifs mandataires PXY_1 120a et PXY_2 120b partagent des mêmes adresses de communication (une pour la communication avec le domaine noir et une pour la communication avec le domaine rouge), typiquement des mêmes adresses virtuelles, telles que des adresses IP virtuelles. Le protocole VRRP (« Virtual Router Redundancy Protocol » en anglais) peut être utilisé pour ce faire. Un des dispositifs mandataires, par exemple le dispositif mandataire PXY_1 120a est déclaré par défaut comme dispositif mandataire maître (« master » en anglais), et tout autre dispositif mandataire du groupement, par exemple le dispositif mandataire PXY_2 120b est déclaré comme dispositif mandataire de repli (« backup » en anglais), afin de remplacer le dispositif mandataire maître en cas de défaillance de celui-ci.

Le dispositif mandataire maître agit comme décrit ici (« herein » en anglais) en relation avec le dispositif mandataire PXY 120. Lorsque le dispositif mandataire maître devient défaillant, un dit dispositif mandataire de repli, dit dispositif mandataire de repli actif, prend sa place. Pour ce faire, le dispositif mandataire maître est configuré pour mettre à jour, au fur et à mesure des stockages dans ses bases de données, le dispositif mandataire de repli actif avec les données contenues dans la première base de données MDB 250 et dans la deuxième base de données ITDB 260, et éventuellement avec les données contenues dans la troisième base de données TDB 280. Préférentiellement, le dispositif mandataire maître est configuré pour mettre à jour le dispositif mandataire de repli actif uniquement avec les données contenues dans la première base de données MDB 250 et dans la deuxième base de données ITDB 260. A la charge alors dudit dispositif mandataire de repli actif d'opérer son processeur d'agrégation d'informations IAP 270 pour reconstruire les données contenues dans la troisième base de données TDB 280. Cette approche permet de limiter le volume des échanges entre le dispositif mandataire maître et le dispositif mandataire de repli actif.

Dans le cas où le groupement comporte plusieurs dispositifs mandataires de repli, un autre dispositif mandataire de repli devient actif. Si d'aventure le dispositif mandataire de repli ayant pris la place de dispositif mandataire maître devient à son tour défaillant, cet autre dispositif mandataire de repli actif prend alors la place de dispositif mandataire maître.

Comme déjà évoqué, la **Fig. 5** illustre schématiquement un autre agencement du système d'exposition de données, présentant un dispositif mandataire inverse RPXY 520.

Le dispositif mandataire inverse RPXY 520 est placé entre la diode D 150 et le domaine rouge. Pour renforcer la sécurité, un troisième pare-feu FW3 510 est préférentiellement intercalé entre la diode D 150 et le dispositif mandataire inverse RPXY 520. Le troisième pare-feu FW3 510 est configuré pour limiter les échanges entre le dispositif mandataire inverse RPXY 520 et la diode D 150 à une obtention des données de métrologie et de topologie dudit réseau de communication BN 100 telles qu'exposées par le dispositif mandataire PXY 120.

Préférentiellement, le troisième pare-feu FW3 510 inclut un système de prévention des intrusions IPS afin de détecter, prévenir et contrer d'éventuelles tentatives d'intrusions malveillantes.

Le dispositif mandataire PXY 120 est configuré pour transmettre les données de métrologie et/ou de topologie du domaine noir comme le dispositif mandataire PXY 120 le ferait en direct avec l'équipement RNE 160 (i.e., sans la présence du dispositif mandataire inverse RPXY 520). Le dispositif mandataire inverse RPXY 520 comporte alors une ou plusieurs bases de données permettant le stockage des données transmises par le dispositif mandataire PXY 120 en attendant de les transmettre à l'équipement RNE 160.

La protection du domaine rouge étant assurée principalement par la diode D 150, complétée préférentiellement par les pares-feux FW2 140 et FW3 510, les échanges entre le dispositif mandataire inverse RPXY 520 et l'équipement RNE 160 peuvent être bidirectionnels.

Ainsi, avec un tel agencement, le dispositif mandataire inverse RPXY 520 peut être configuré pour transmettre les données de métrologie et/ou de topologie du domaine noir à l'équipement RNE 160 en utilisant un protocole avec acquittement, tel que TCP, pour gérer les potentielles pertes de paquets. Tout autre protocole adapté au fonctionnement du domaine rouge peut être utilisé, comme par exemple BGP-LS pour émuler la structure réseau du domaine noir comme faisant partie du domaine rouge.

Il est aussi possible dans cet agencement de s'abstraire de la contrainte d'utilisation d'un protocole de couche de transport forcé par la diode D 150 (4^{e} couche du modèle OSI).

Ainsi, en variante, un tel agencement permet à l'équipement RNE 160 ou tout autre dispositif du domaine rouge de requérir à son rythme les données de métrologie et/ou de topologie du domaine noir, voire de requérir à certains moments les données de métrologie, à d'autres moments les données de topologie et à encore d'autres moments les données agrégées, en fonction de ses propres besoins (contrôleur SDN, collecteur de métrologie...). Par exemple, le dispositif mandataire inverse RPXY 520 peut être configuré pour exporter une interface de programmation applicative API (« Application Programming Interface » en anglais), permettant à l'équipement RNE 160 de requérir des données par un appel de type GET et au dispositif mandataire inverse RPXY 520 d'y répondre de manière standardisée, en utilisant par exemple un protocole de couche applicative de type RPC (« Remote Procedure Call » en anglais).

Comme déjà évoqué, la **Fig. 6** illustre schématiquement un organigramme d'un algorithme particulier d'exposition de données du domaine noir vers l'équipement RNE 160, qui est implémenté par le système d'exposition de données SYS 190, et plus particulièrement par le dispositif mandataire PXY 120.

Dans une étape 601, le dispositif mandataire PXY 120 collecte des données de métrologie du domaine noir, plus précisément du réseau de communication 100, comme déjà détaillé.

Dans une étape 602, le dispositif mandataire PXY 120 traite et stocke en base de données les données de métrologie collectées à l'étape 601, comme déjà détaillé.

Dans une étape 603, le dispositif mandataire PXY 120 collecte des données de topologie du domaine noir, plus précisément du réseau de communication 100, comme déjà détaillé.

Dans une étape 604, le dispositif mandataire PXY 120 traite et stocke en base de données les données de topologie collectées à l'étape 603, comme déjà détaillé.

Dans une étape 605, le dispositif mandataire PXY 120 agrège et stocke en base de données les données de métrologie stockées à l'étape 602 et les données de topologie stockées à l'étape 604, comme déjà détaillé.

Dans une étape 605, le système d'exposition de données SYS 190 transmet les données agrégées à l'équipement RNE 160, selon l'un quelconque des modes de réalisation précédemment décrits.

Ainsi, grâce aux données de métrologie et de topologie relatives au réseau de communication 100, l'équipement RNE 160 peut établir une politique de routage en fonction des besoins de sa topologie, par exemple un domaine rouge à structure maillée (« meshed » en anglais) qui a besoin de gérer en profondeur sa QoS (« Quality of Service » en anglais). En effet, dans des architectures réseau où cohabitent plusieurs niveaux de sécurité, le routage établi par un domaine de sécurité plus élevé (domaine rouge) peut s'avérer sous-optimal par manque d'informations de topologie et de qualité de liens sous-jacents appartenant à un domaine de sécurité moins élevé (domaine noir). Le système d'exposition de données SYS 190 décrit ci-dessus permet de pallier ce manque, sans remettre en cause l'intégrité du domaine de sécurité plus élevé (domaine rouge).

## Revendications

1. Système d'exposition de données (190) configuré pour exposer (606) à un équipement (160) des données de métrologie et de topologie d'un réseau de communication (100) d'un domaine d'un premier niveau de sécurité, l'équipement (160) appartenant à un domaine d'un deuxième niveau de sécurité plus élevé que le premier niveau de sécurité, le système d'exposition de données (190) comportant :
- un dispositif mandataire (120), configuré pour effectuer une collecte (601, 603) de données de métrologie dudit réseau de communication (100) et de données de topologie dudit réseau de communication (100) à partir de messages transmis dans ledit réseau de communication (100) et captés par ledit dispositif mandataire (120), et pour exposer (606) les données de métrologie et de topologie dudit réseau de communication (100) ;
- une diode (150), placée entre le dispositif mandataire (120) et ledit équipement (160), la diode (150) autorisant physiquement des transmissions unidirectionnelles uniquement depuis le dispositif mandataire (120) vers le domaine de deuxième niveau de sécurité.

2. Système d'exposition de données (190) selon la revendication 1, comportant en outre :
- un premier pare-feu (130), placé entre ledit réseau de communication (100) et le dispositif mandataire (120), et configuré pour limiter des échanges entre le dispositif mandataire (120) et ledit réseau de communication (100) à la collecte (601, 603) desdites données de métrologie et de topologie ;
- un deuxième pare-feu (140), placé entre le dispositif mandataire (120) et la diode (150), et configuré pour limiter des échanges avec le dispositif mandataire (120) à une exposition desdites données de métrologie et de topologie dudit réseau de communication (100).

3. Système d'exposition de données (190) selon la revendication 2, dans lequel le premier pare-feu (130) et le deuxième pare-feu (140) incluent un système de prévention des intrusions.

4. Système d'exposition de données selon l'une des revendications 1 à 3, dans lequel le dispositif mandataire (120) comporte :
- un premier tampon mémoire (210) dédié à collecter les données de métrologie transmises via ledit réseau de communication (100) et relatives à des qualités de liens dudit réseau de communication (100) ;
- une première base de données (250) utilisée pour exposer les données de métrologie audit équipement (160) ;
- un processeur de données de métrologie (230) configuré pour traiter (602) les données de métrologie dans le premier tampon mémoire (210), en charge de transférer des données stockées dans le premier tampon mémoire (210) vers la première base de données, configuré pour ajouter un identifiant par ensemble de données de métrologie transféré dans la première base de données (250), l'identifiant en question permettant de déterminer quelles données dans la première base de données (250) sont les plus récentes ;
- un deuxième tampon mémoire (220) dédié à collecter les données de topologie transmises via ledit réseau de communication (100) et relatives audit réseau de communication (100) ;
- une deuxième base de données (260) utilisée pour exposer les données de topologie audit équipement (160) ;
- un processeur de données de topologie configuré pour traiter (604) les données de topologie dans le deuxième tampon mémoire (220), en charge de transférer des données stockées dans le deuxième tampon mémoire (220) vers la deuxième base de données (260), configuré pour ajouter un identifiant par ensemble de données de topologie transféré dans la deuxième base de données (260), l'identifiant en question permettant de déterminer quelles données dans la deuxième base de données (260) sont les plus récentes.

5. Système d'exposition de données (190) selon la revendication 4, dans lequel le processeur de données de métrologie (230) est configuré pour effectuer du filtrage dans le premier tampon mémoire (210) pour éviter d'insérer des données de métrologie déjà obsolètes dans la première base de données (250), et le processeur de données de topologie (240) est configuré pour effectuer du filtrage dans le deuxième tampon mémoire (220) pour éviter d'insérer des données de topologie déjà obsolètes dans la deuxième base de données (260).

6. Système d'exposition de données (190) selon la revendication 5, dans lequel le processeur de données de topologie (240) est configuré pour effectuer du filtrage dans le deuxième tampon mémoire (220) pour retenir un état stable de lien le plus récent lorsqu'au moins un lien montre dans le deuxième tampon mémoire (220) des changements intempestifs d'état de lien.

7. Système d'exposition de données (190) selon l'une des revendications 4 à 6, dans lequel le dispositif mandataire (120) comporte :
- une troisième base de données (280) utilisée pour exposer des données agrégées de métrologie et de topologie audit équipement (160) ; et
- un processeur d'agrégation d'informations (270), en charge d'agréger et de transférer, dans la troisième base de données (280), des données stockées dans la première base de données (250) et des données stockées dans la deuxième base de données (260), le processeur d'agrégation d'informations (270) étant configuré pour rassembler, par lien de communication, les informations de topologie stockées dans la deuxième base de données (260) les plus récentes et les informations de métrologie stockées dans la première base de données (250) les plus récentes.

8. Système d'exposition de données (190) selon l'une quelconque des revendications 4 à 7, dans lequel le dispositif mandataire (120) est un dispositif mandataire maître (120a) dans un groupement de dispositifs mandataires (400) du système d'exposition de données (190) incluant en outre un dispositif mandataire de repli (120b) qui partage des mêmes adresses virtuelles que le dispositif mandataire maître (120a) et qui est destiné à remplacer le dispositif mandataire maître (120a) en cas de défaillance dudit dispositif mandataire maître (120a), le dispositif mandataire maître (120a) étant configuré pour mettre à jour, au fur et à mesure des stockages dans ses bases de données (250, 260, 280), le dispositif mandataire de repli (120b).

9. Système d'exposition de données (190) selon l'une quelconque des revendications 1 à 8, dans lequel la diode (150) autorise uniquement des transmissions réalisées selon des protocoles prédéfinis de couche de transport.

10. Système d'exposition de données (190) selon l'une quelconque des revendications 1 à 9, comportant en outre un dispositif mandataire inverse (520), placé entre la diode (150) et ledit équipement (160), et configuré pour recevoir les données de métrologie et de topologie dudit réseau de communication (100) telles qu'exposées (606) par le dispositif mandataire (120), et pour effectuer des échanges bidirectionnels avec ledit équipement (160).

11. Système d'exposition de données (190) selon la revendication 10, comportant un troisième pare-feu (510), placé entre la diode (150) et le dispositif mandataire inverse (520), et configuré pour limiter des échanges avec la diode (150) à une obtention desdites données de métrologie et de topologie dudit réseau de communication (100) telles qu'exposées par le dispositif mandataire (120).

12. Procédé pour exposer (606) à un équipement (160) des données de métrologie et de topologie d'un réseau de communication (100) d'un domaine d'un premier niveau de sécurité, l'équipement (160) appartenant à un domaine d'un deuxième niveau de sécurité plus élevé que le premier niveau de sécurité, le procédé étant implémenté par un système d'exposition de données (190) comportant :
- un dispositif mandataire (120),
- une diode (150), placée entre le dispositif mandataire (120) et ledit équipement (160) ;
le procédé comportant les étapes suivantes :
- le dispositif mandataire (120) effectue une collecte (601, 603) de données de métrologie dudit réseau de communication et de données de topologie dudit réseau de communication (100) à partir de messages transmis dans ledit réseau de communication (100) et captés par ledit dispositif mandataire (120), et expose (606) les données de métrologie et de topologie dudit réseau de communication (100) ; et
- la diode (150) autorise physiquement des transmissions unidirectionnelles uniquement depuis le dispositif mandataire (120) vers le domaine de deuxième niveau de sécurité.

13. Procédé selon la revendication 12, dans lequel le système d'exposition de données (190) comporte en outre :
- un dispositif mandataire inverse (520), placé entre la diode (150) et ledit équipement (160) ; et
le procédé comportant les étapes suivantes :
- le dispositif mandataire inverse reçoit les données de métrologie et de topologie dudit réseau de communication (100) telles qu'exposées par le dispositif mandataire (120), et effectue des échanges bidirectionnels avec ledit équipement (160) pour exposer les données de métrologie et de topologie dudit réseau de communication (100) à l'équipement (160).

## Patentansprüche

1. Datenoffenlegungssystem (190), das dazu konfiguriert ist, Metrologie- und Topologiedaten eines Kommunikationsnetzes (100) einer Domäne eines ersten Sicherheitsniveaus an eine Ausrüstung (160) offenzulegen (606), wobei die Ausrüstung (160) zu einer Domäne eines zweiten Sicherheitsniveaus gehört, das höher als das erste Sicherheitsniveau ist, wobei das Datenoffenlegungssystem (190) Folgendes beinhaltet:
- eine Proxy-Vorrichtung (120), die dazu konfiguriert ist, eine Erfassung (601, 603) von Metrologiedaten des Kommunikationsnetzes (100) und von Topologiedaten des Kommunikationsnetzes (100) anhand von Nachrichten durchzuführen, die im Kommunikationsnetz (100) gesendet und von der Proxy-Vorrichtung (120) eingefangen werden, und die Metrologie- und Topologiedaten des Kommunikationsnetzes (100) offenzulegen (606);
- eine Diode (150), die zwischen der Proxy-Vorrichtung (120) und der Ausrüstung (160) platziert ist, wobei die Diode (150) unidirektionale Übertragungen nur von der Proxy-Vorrichtung (120) zur Domäne des zweiten Sicherheitsniveaus physisch erlaubt.

2. Datenoffenlegungssystem (190) nach Anspruch 1, das ferner Folgendes beinhaltet:
- eine erste Firewall (130), die zwischen dem Kommunikationsnetz (100) und der Proxy-Vorrichtung (120) platziert ist und dazu konfiguriert ist, Austausch zwischen der Proxy-Vorrichtung (120) und dem Kommunikationsnetz (100) auf die Erfassung (601, 603) der Metrologie- und Topologiedaten zu begrenzen;
- eine zweite Firewall (140), die zwischen der Proxy-Vorrichtung (120) und der Diode (150) platziert und dazu konfiguriert ist, Austausch mit der Proxy-Vorrichtung (120) auf eine Offenlegung der Metrologie- und Topologiedaten des Kommunikationsnetzes (100) zu begrenzen.

3. Datenoffenlegungssystem (190) nach Anspruch 2, wobei die erste Firewall (130) und die zweite Firewall (140) ein Intrusion-Prevention-System beinhalten.

4. Datenoffenlegungssystem nach einem der Ansprüche 1 bis 3, wobei die Proxy-Vorrichtung (120) Folgendes beinhaltet:
- einen ersten Speicherpuffer (210) zur Erfassung der Metrologiedaten, die über das Kommunikationsnetz (100) gesendet werden und sich auf Verbindungsqualitäten des Kommunikationsnetzes (100) beziehen;
- eine erste Datenbank (250), die dafür verwendet wird, die Metrologiedaten an die Ausrüstung (160) offenzulegen;
- einen Metrologiedatenprozessor (230), der dazu konfiguriert ist, die Metrologiedaten im ersten Speicherpuffer (210) zu verarbeiten (602), der dafür zuständig ist, Daten, die im ersten Speicherpuffer (210) gespeichert sind, zur ersten Datenbank zu übertragen, der dazu konfiguriert ist, eine Kennung pro Metrologiedatensatz hinzuzufügen, der in die erste Datenbank (250) übertragen wird, wobei es die betreffende Kennung ermöglicht, zu bestimmen, welche Daten in der ersten Datenbank (250) die neuesten sind;
- einen zweiten Speicherpuffer (220) zur Erfassung der Topologiedaten, die über das Kommunikationsnetz (100) gesendet werden und sich auf das Kommunikationsnetz (100) beziehen;
- eine zweite Datenbank (260), die dafür verwendet wird, die Topologiedaten an die Ausrüstung (160) offenzulegen;
- einen Topologiedatenprozessor, der dazu konfiguriert ist, die Topologiedaten im zweiten Speicherpuffer (220) zu verarbeiten (604), der dafür zuständig ist, Daten, die im zweiten Speicherpuffer (220) gespeichert sind, zur zweiten Datenbank (260) zu übertragen, der dazu konfiguriert ist, eine Kennung pro Topologiedatensatz hinzuzufügen, der in die zweite Datenbank (260) übertragen wird, wobei es die betreffende Kennung ermöglicht, zu bestimmen, welche Daten in der zweiten Datenbank (260) die neuesten sind.

5. Datenoffenlegungssystem (190) nach Anspruch 4, wobei der Metrologiedatenprozessor (230) dazu konfiguriert ist, eine Filterung im ersten Speicherpuffer (210) durchzuführen, um zu vermeiden, das bereits veraltete Metrologiedaten in die erste Datenbank (250) eingefügt werden, und der Topologiedatenprozessor (240) dazu konfiguriert ist, eine Filterung im zweiten Speicherpuffer (220) durchzuführen, um zu vermeiden, dass bereits veraltete Topologiedaten in die zweite Datenbank (260) eingefügt werden.

6. Datenoffenlegungssystem (190) nach Anspruch 5, wobei der Topologiedatenprozessor (240) dazu konfiguriert ist, eine Filterung im zweiten Speicherpuffer (220) durchzuführen, um einen letzten stabilen Verbindungszustand beizubehalten, wenn wenigstens eine Verbindung im zweiten Speicherpuffer (220) ungewollte Veränderungen des Verbindungszustands zeigt.

7. Datenoffenlegungssystem (190) nach einem der Ansprüche 4 bis 6, wobei die Proxy-Vorrichtung (120) Folgendes beinhaltet:
- eine dritte Datenbank (280), die dafür verwendet wird, aggregierte Metrologie- und Topologiedaten an die Ausrüstung (160) offenzulegen; und
- einen Prozessor zur Aggregation von Informationen (270), der dafür zuständig ist, Daten, die in der ersten Datenbank (250) gespeichert sind, und Daten, die in der zweiten Datenbank (260) gespeichert sind, zu aggregieren und in die dritte Datenbank (280) zu übertragen, wobei der Prozessor zur Aggregation von Informationen (270) dazu konfiguriert ist, per Kommunikationsverbindung die in der zweiten Datenbank (260) gespeicherten neuesten Topologieinformationen und die in der ersten Datenbank (250) gespeicherten neuesten Metrologieinformationen zu sammeln.

8. Datenoffenlegungssystem (190) nach einem der Ansprüche 4 bis 7, wobei die Proxy-Vorrichtung (120) eine Master-Proxy-Vorrichtung (120a) in einer Gruppierung von Proxy-Vorrichtungen (400) des Datenoffenlegungssystems (190) ist, die ferner eine Fallback-Proxy-Vorrichtung (120b) beinhaltet, die dieselben virtuellen Adressen wie die Master-Proxy-Vorrichtung (120a) teilt und die dazu bestimmt ist, die Master-Proxy-Vorrichtung (120a) im Falle eines Fehlers der Master-Proxy-Vorrichtung (120a) zu ersetzen, wobei die Master-Proxy-Vorrichtung (120a) dazu konfiguriert ist, im Verlauf der Speicherungen in ihren Datenbanken (250, 260, 280) die Fallback-Proxy-Vorrichtung (120b) zu aktualisieren.

9. Datenoffenlegungssystem (190) nach einem der Ansprüche 1 bis 8, wobei die Diode (150) nur Übertragungen erlaubt, die gemäß den vorgegebenen Transportschichtprotokollen durchgeführt werden.

10. Datenoffenlegungssystem (190) nach einem der Ansprüche 1 bis 9, das ferner eine Reverse-Proxy-Vorrichtung (520) beinhaltet, die zwischen der Diode (150) und der Ausrüstung (160) platziert ist und dazu konfiguriert ist, Metrologie- und Topologiedaten des Kommunikationsnetzes (100) zu empfangen, wie durch die Proxy-Vorrichtung (120) offengelegt (606), und bidirektionalen Austausch mit der Ausrüstung (160) vorzunehmen.

11. Datenoffenlegungssystem (190) nach Anspruch 10, das eine dritte Firewall (510) beinhaltet, die zwischen der Diode (150) und der Reverse-Proxy-Vorrichtung (520) platziert und dazu konfiguriert ist, Austausch mit der Diode (150) auf einen Erhalt der Metrologie- und Topologiedaten des Kommunikationsnetzes (100) zu begrenzen, wie durch die Proxy-Vorrichtung (120) offengelegt.

12. Verfahren zur Offenlegung (606) von Metrologie- und Topologiedaten eines Kommunikationsnetzes (100) einer Domäne eines ersten Sicherheitsniveaus an eine Ausrüstung (160), wobei die Ausrüstung (160) zu einer Domäne eines zweiten Sicherheitsniveaus gehört, das höher als das erste Sicherheitsniveau ist, wobei das Verfahren von einem Datenoffenlegungssystem (190) implementiert wird, das Folgendes beinhaltet:
- eine Proxy-Vorrichtung (120),
- eine Diode (150), die zwischen der Proxy-Vorrichtung (120) und der Ausrüstung (160) platziert ist;
wobei das Verfahren die folgenden Schritte beinhaltet:
- eine Proxy-Vorrichtung (120) führt eine Erfassung (601, 603) von Metrologiedaten des Kommunikationsnetzes und von Topologiedaten des Kommunikationsnetzes (100) anhand von Nachrichten durch, die im Kommunikationsnetz (100) gesendet und von der Proxy-Vorrichtung (120) eingefangen werden, und legt die Metrologie- und Topologiedaten des Kommunikationsnetzes (100) offen (606); und
- die Diode (150) erlaubt unidirektionale Übertragungen nur von der Proxy-Vorrichtung (120) zur Domäne des zweiten Sicherheitsniveaus physisch.

13. Verfahren nach Anspruch 12, wobei das Datenoffenlegungssystem (190) ferner Folgendes beinhaltet:
- eine Reverse-Proxy-Vorrichtung (520), die zwischen der Diode (150) und der Ausrüstung (160) platziert ist; und
wobei das Verfahren die folgenden Schritte beinhaltet:
- die Reverse-Proxy-Vorrichtung empfängt die Metrologie- und Topologiedaten des Kommunikationsnetzes (100), wie durch die Proxy-Vorrichtung (120) offengelegt, und nimmt bidirektionalen Austausch mit der Ausrüstung (160) vor, um die Metrologie- und Topologiedaten des Kommunikationsnetzes (100) an die Ausrüstung (160) offenzulegen.

## Claims

1. A data exposure system (190) configured to expose (606) to an equipment (160) metrology and topology data of a communication network (100) of a domain with a first security level, the equipment (160) belonging to a domain with a second security level higher than the first security level, wherein the data exposure system (190) comprises:
- a proxy device (120) configured to collect (601, 603) metrology data of said communication network (100) and topology data of said communication network (100) from messages transmitted in said communication network (100) and captured by said proxy device (120), and to expose (606) the metrology and topology data of said communication network (100);
- a diode (150) located between the proxy device (120) and said equipment (160), the diode (150) physically allowing unidirectional transmissions only from the proxy device (120) to the domain with second security level.

2. The data exposure system (190) according to claim 1, further comprising:
- a first firewall (130) located between said communication network (100) and the proxy device (120), and configured to limit exchanges between the proxy device (120) and said communication network (100) to the collection (601, 603) of said metrology and topology data;
- a second firewall (140) located between the proxy device (120) and the diode (150), and configured to limit exchanges with the proxy device (120) to exposure of said metrology and topology data of said communication network (100).

3. The data exposure system (190) according to claim 2, wherein the first firewall (130) and the second firewall (140) include an intrusion prevention system.

4. The data exposure system according to one of claims 1 to 3, wherein the proxy device (120) comprises:
- a first memory buffer (210) dedicated to collecting metrology data transmitted via said communication network (100) and relating to link qualities of said communication network (100);
- a first database (250) used to expose the metrology data to said equipment (160);
- a metrology data processor (230) configured to process (602) the metrology data in the first memory buffer (210), responsible for transferring data stored in the first memory buffer (210) to the first database, configured to add an identifier per set of metrology data transferred to the first database (250), the identifier in question enabling the determination of which data in the first database (250) is the most recent;
- a second memory buffer (220) dedicated to collecting topology data transmitted via said communication network (100) and relating to said communication network (100);
- a second database (260) used to expose the topology data to said equipment (160);
- a topology data processor configured to process (604) the topology data in the second memory buffer (220), responsible for transferring data stored in the second memory buffer (220) to the second database (260), configured to add an identifier per set of topology data transferred to the second database (260), the identifier in question enabling the determination of which data in the second database (260) is the most recent.

5. The data exposure system (190) according to claim 4, wherein the metrology data processor (230) is configured to perform filtering in the first memory buffer (210) to prevent already obsolete metrology data from being inserted into the first database (250), and the topology data processor (240) is configured to perform filtering in the second memory buffer (220) to prevent already obsolete topology data from being inserted into the second database (260).

6. The data exposure system (190) according to claim 5, wherein the topology data processor (240) is configured to perform filtering in the second memory buffer (220) to retain a most recent stable link state when at least one link indicates untimely link state changes in the second memory buffer (220).

7. The data exposure system (190) according to one of claims 4 to 6, wherein the proxy device (120) comprises:
- a third database (280) used to expose aggregated metrology and topology data to said equipment (160); and
- an information aggregation processor (270), responsible for aggregating and transferring data stored in the first database (250) and data stored in the second database (260) to the third database (280), wherein the information aggregation processor (270) is configured to gather, via a communication link, the most recent topology information stored in the second database (260) and the most recent metrology information stored in the first database (250).

8. The data exposure system (190) according to any one of claims 4 to 7, wherein the proxy device (120) is a master proxy device (120a) in a proxy device cluster (400) of the data exposure system (190) further comprising a fallback proxy device (120b) that shares the same virtual addresses as the master proxy device (120a), and is intended to replace the master proxy device (120a) in the event of failure of said master proxy device (120a), wherein the master proxy device (120a) is configured to update the fallback proxy device (120b) as storage occurs in its databases (250, 260, 280).

9. The data exposure system (190) according to any one of claims 1 to 8, wherein the diode (150) only permits transmissions performed according to predefined transport layer protocols.

10. The data exposure system (190) according to any one of claims 1 to 9, further comprising a reverse proxy device (520) located between the diode (150) and said equipment (160), and configured to receive the metrology and topology data of said communication network (100) as exposed (606) by the proxy device (120), and to perform bidirectional exchanges with said equipment (160).

11. The data exposure system (190) according to claim 10, comprising a third firewall (510) located between the diode (150) and the reverse proxy device (520), and configured to limit exchanges with the diode (150) to obtaining said metrology and topology data of said communication network (100) as exposed by the proxy device (120).

12. A method for exposing (606) to an equipment (160) metrology and topology data of a communication network (100) of a domain with a first security level, the equipment (160) belonging to a domain with a second security level higher than the first security level, wherein the method is implemented by a data exposure system (190) comprising:
- a proxy device (120),
- a diode (150) located between the proxy device (120) and said equipment (160);
wherein the method comprises the following steps:
- a proxy device (120) collects (601, 603) metrology data of said communication network and topology data of said communication network (100) from messages transmitted in said communication network (100) and captured by said proxy device (120), and exposes (606) the metrology and topology data of said communication network (100); and
- the diode (150) physically allows unidirectional transmissions only from the proxy device (120) to the domain with second security level.

13. The method according to claim 12, wherein the data exposure system (190) further comprises:
- a reverse proxy device (520) located between the diode (150) and said equipment (160); and
wherein the method comprises the following steps:
- the reverse proxy device receives the metrology and topology data of said communication network (100) as exposed by the proxy device (120), and performs bidirectional exchanges with said equipment (160) to expose the metrology and topology data of said communication network (100) to the equipment (160).
